# EUROPÄISCHE PATENTSCHRIFT

(11) **EP 1 181 471 B1**
(45) Veröffentlichungstag und Bekanntmachung des Hinweises auf die Patenterteilung: **05.11.2003**
(21) Anmeldenummer: 00938732.5
(22) Anmeldetag: 02.06.2000
(51) Int. Cl.: F16K 1/44, F16K 41/10

(54) **SCHIESSGLIED-EINHEIT FÜR EIN ASEPTISCHES DOPPELSITZVENTIL**
CLOSURE UNIT FOR AN ASEPTIC DOUBLE-SEAT VALVE
UNITE D'OBTURATION POUR UNE SOUPAPE ASEPTIQUE A DOUBLE SIEGE

(30) Priorität: 08.06.1999 DE 19925990; 29.11.1999 DE 19957306
(43) Veröffentlichungstag der Anmeldung: 27.02.2002
(73) Patentinhaber: TUCHENHAGEN GmbH, 21514 Büchen (DE)
(72) Erfinder: RAUEN, Wolfgang, D-24149 Kiel (DE)
(74) Vertreter: Glaeser, Joachim, Dipl.-Ing.
(86) Internationale Anmeldenummer: EP0005053
(87) Internationale Veröffentlichungsnummer: WO00075541

(56) Entgegenhaltungen:
- EP-A- 0 484 915
- DE-A- 4 243 111
- FR-A- 2 223 602

## Beschreibung

Die Erfindung betrifft eine Schließglied-Einheit für ein aseptisches Doppelsitzventil nach dem Oberbegriff des Anspruchs 1.

Das klassische Doppelsitzventil zeichnet sich dadurch aus, daß es mit zwei voneinander unabhängigen, relativ zueinander bewegbaren Schließgliedem ausgestattet ist, von denen das unabhängig angetriebene, das sog. aktive Schließglied, beim Öffnungsvorgang nach einem bestimmten Teilhub am abhängig angetriebenen, dem sog. passiven Schließglied, zur Anlage kommt und dieses bei der weiteren Öffnungsbewegung gleichfalls in die Offenstellung überführt. Die Verschlußteile der beiden Schließglieder schließen sowohl in der Schließ- als auch in der Offenstellung einen Leckagehohlraum zwischen sich ein, der zumindest in der Schließstellung wenigstens einen Verbindungsweg mit der Umgebung des Doppelsitzventils aufweist. Die mit den Verschlußteilen verbundenen und zu einem Antrieb führenden Stangen sind entweder auf einer Seite des Doppelsitzventils aus dem in Frage kommenden Ventilgehäuseteil herausgeführt (**GM 77 02 634**) oder die beiden Stangen werden auf einander gegenüberliegenden Seiten aus dem jeweiligen Ventilgehäuseteil an den zugeordneten Antrieb herangeführt (**DE 24 56 675 A1**). Dabei kann die Verbindung des Leckagehohlraums mit der Umgebung des Doppelsitzventils schließgliedseitig erfolgen, und zwar dergestalt, daß die Verbindungswege zum Leckagehohlraum innerhalb der Stangen der Schließglieder ausgeführt und auf einer Seite aus dem Doppelsitzventil herausgeführt sind **(GM 77 02 634**), oder aber wenigstens einer der Verbindungswege zwischen dem Leckagehohlraum und der Umgebung des Doppelsitzventils ist in einem Rohr ausgeführt, welches mit einem der Schließglieder verbunden und über das zugeordnete Ventilgehäuseteil in die Umgebung des Doppelsitzventils geführt ist **(DE 25 32 838 C3).**

Die vorgenannten klassischen Doppelsitzventile haben sich überall dort bewährt, wo sogenannte feindliche Flüssigkeiten, wie beispielsweise Nahrungs- und Reinigungsmittel, sicher voneinander getrennt werden müssen und wo die Anforderungen an die Sterilität und die Keimfreiheit solcher Produkte über normale Anforderungen nicht hinausgehen, d.h. wo keimarme Bedingungen gegeben sind und nicht Keimfreiheit gefordert wird bzw. sterile Betriebsbedingungen vorliegen müssen.

Bei hohen Anforderungen an die Sterilität und die Keimfreiheit der Produkte, insbesondere unter aseptischen Bedingungen, wie beispielsweise in der Pharmaindustrie, in der Bio- sowie der Gentechnologie und auch bei der Herstellung steriler Produkte, die über längere Zeit haltbar sein sollen, wie H-Milch, Joghurt und andere vergleichbare Produkte, sind die vorgenannten klassischen Doppelsitzventile, die in der hier getroffenen Auswahl lediglich stellvertretenden Charakter haben, in der Regel ungeeignet. Dies resultiert im wesentlichen aus der Tatsache, daß zum einen die Stangen der Schließglieder über dynamisch beanspruchte Dichtungen aus den Ventilgehäuseteilen in die Umgebung herausgeführt sind, und daß zum anderen bei jedem Schaltvorgang Produkt in den Leckagehohlraum zwischen den beiden Verschlußteilen gelangt (sog. Schaltleckage), das dort über den Verbindungsweg oder die Verbindungswege zur Umgebung mit der Umgebungsluft in Berührung kommt. Ein derartiger Kontakt des Produktes mit der Umgebung ist unerwünscht oder unzulässig. Über die dynamisch beanspruchte Dichtung wird Produkt in den Dichtungsspalt verschleppt (sog. "Fahrstuhleffekt"). Es kann dort zu einer Verkeimung und/oder Kontamination mit der Umgebungsluft kommen, so daß bei den sich anschließenden Schaltbewegungen das verkeimte und/oder kontaminierte Produkt in den Produktraum rücktransportiert werden und dort eine Reinfektion stattfinden kann.

Eine aseptische Doppelsitz-Ventilvorrichtung, die zumindest den zu fordernden aseptischen Anforderungen gerecht wird, ist aus der **DE 42 43 111 A1** bekannt. Dort sind sowohl die Durchführung der als Hohlstange ausgeführten außenliegenden Ventilstange im Bereich zwischen dem zugeordneten Verschlußteil und ihrer Durchführung durch das Ventilgehäuse als auch der Bereich zwischen den beiden Verschlußteilen jeweils mit einer Membran, einer sog. Faltenbalgmembran, überbrückt. Durch diese Ausgestaltung kann weder Produkt in den Dichtungsspalt zwischen Ventilstange und Ventilgehäuse gelangen noch wird bei der Schaltbewegung Produkt aus dem Leckagehohlraum in die Bereiche zwischen den Stangen eingetragen, wo zumindest prinzipiell die Gefahr einer Kontamination mit der Außenluft bestünde. Die Schaltleckage selbst wird bei dem bekannten Ventil weder verhindert noch reduziert.

Die bekannte aseptische Doppelsitz-Ventilvorrichtung ist in Bezug auf die Schließgliedanordnung und die beiden Membrane relativ aufwendig aufgebaut. Bei den verwendeten Faltenbalgmembranen handelt es sich in der Regel um metallische Bauteile, die an ihrem jeweiligen verschlußteilseitigen Ende mit dem betreffenden Verschlußteil stoffschlüssig verbunden werden müssen. Das gehäuseseitige Ende der Membran ist auf die gleiche Weise mit einem Gehäuseverschlußteil zu verbinden. Darüber hinaus müssen die metallischen Verschlußteile mit Sitzdichtungen ausgeführt werden, die ihrerseits in Nuten eingebettet sind. Diese Nuten stellen grundsätzlich kritische Bereiche des Ventils dar, da hier eine Verkeimung stattfinden kann, wenn die Dichtungsspalte nicht einwandfrei gereinigt werden.

Bei Doppelsitzventilen mit als Sitzteller ausgebildeten Verschlußteilen ist bekannt, das Problem der sogenannten Schaltleckage dadurch zu reduzieren, daß der Leckagehohlraum zunächst zur Umgebung hin verschlossen wird, bevor das unabhängig angetriebenen Verschlußteil seine Sitzfläche verläßt. Der dergestalt abgegrenzte Leckagehohlraum wird zwar bei der nachfolgenden Öffnungsbewegung des Doppelsitzventils aus dem in Frage kommenden Ventilgehäuseteil heraus mit Produkt beaufschlagt, ein Abfließen eines größeren Volumens, als durch den abgegrenzten Leckagehohlraum vorgegeben ist, kann nicht erfolgen. Ein derartiges die Schaltleckage begrenzendes Doppelsitzventil ist aus der **DE 28 18 787 C2** bekannt. Es weist ein sogenanntes Hilfsventil zwischen den beiden als Sitzteller ausgebildeten Schließgliedern des Doppelsitzventils auf. Das Hilfsventil besteht aus zwei relativ zueinander beweglichen Ventiltellern. Jeder dieser Ventilteller weist einen Dichtsitz auf. Der oben liegende Ventilteller, der gleichzeitig auch das unabhängig angetriebene erste Schließglied des Doppelsitzventils bildet, liegt mit seinem Dichtsitz auf dem Ventilgehäuse auf. Der unten liegende Ventilteller des Hilfsventils, der sogenannte Hilfsventilteller, kommt nach einer Teilhubbewegung mit seinem Dichtsitz am abhängig angetriebenen zweiten Schließglied des Doppelsitzventils zur Anlage. Von den beiden Dichtsitzen der vorgenannten Ventilteller des Hilfsventils geht eine Membran aus, die den Zwischenraum zwischen den beiden Ventiltellern des Hilfsventils elastisch überbrückt und gleichzeitig auch den zwischen den beiden Schließgliedem des Doppelsitzventils in dessen Schließstellung gebildeten Leckagehohlraum begrenzt.

Mit der die beiden relativ zueinander beweglichen Ventilteller des Hilfsventils überbrückenden Membran wird zweierlei erreicht: Zum einen wird der Leckagehohlraum zur Umgebung des Doppelsitzventils hin abgegrenzt, so daß die Schaltleckage auf das Volumen dieses derart abgegrenzten Leckagehohlraums begrenzt ist. Zum anderen hat die Membran eine einfache, glatte Oberfläche, so daß der durch diese Membran begrenzte Teil des Leckagehohlraums, im Gegensatz zu dem entsprechenden Bereich beim Doppelsitzventil gemäß **DE 42 43 111 A1,** eine reinigungsfreundliche Oberflächengestalt und -geometrie aufweist. Die membranseitige Berandung des Leckagehohlraumes ist einerseits strömungsgünstig, andererseits verhindert sie das Festsetzen von größeren Partikeln aus dem Produkt.

Aus der **WO 98/54 493** ist ein Doppelsitzventil, insbesondere für aseptische Anwendungszwecke, bekannt, bei dem die beiden unabhängig voneinander axial verschiebbaren Verschlußteile, ähnlich wie dies bei dem Hilfsventil gemäß **DE 28 18 787 C2** der Fall ist, mittels einer Membran überbrückt sind. Letztere ist, nach dem Vorbild aus der **DE 28 18 787 C2,** mit seinen beiden Endabschnitten an den beiden Verschlußteilen jeweils dichtend befestigt, wobei an jeden Endabschnitt angrenzend eine Dichtfläche ausgebildet ist, die durch das zugeordnete Verschlußteil an den zugehörigen Ventilsitz andrückbar ist. Diesem bekannten Doppelsitzventil liegt die Aufgabe zugrunde, die Ausgestaltung des Leckagehohlraumes zu verbessern, so daß die zu verarbeitende Substanz strömungsgünstig passieren kann, auch wenn größere Partikel darin enthalten sind. Insoweit besteht auch Übereinstimmung mit den durch die **DE 28 18 787 C2** erzielbaren Vorteilen. Während beim Doppelsitzventil gemäß **DE 28 18 787 C2** die Membran als einstückiges, ringförmig umlaufend ausgestaltetes, elastisches Dichtelement ausgeführt ist, das bei der axialen Bewegung des Hilfsventiltellers lediglich eine in gleicher Richtung orientierte Dehnung vollzieht, ist das einstückige, ringförmig umlaufend ausgestaltete, elastische Dichtelement beim Doppelsitzventil gemäß **WO 98/54 493** derart ausgeführt, daß es einen seine beiden Endabschnitte miteinander verbindenden Rollmembranabschnitt besitzt.

Bei beiden bekannten Doppelsitzventilen ist die membranseitige Berandung des Leckagehohlraumes strömungsgünstig und reinigungsfreundlich ausgestaltet. Darüber hinaus ist bei beiden die Schaltleckage im Zuge der Öffnungsbewegung des Doppelsitzventils begrenzt, wobei diese Begrenzung durch den Verschluß des schließgliedseitig ausgeführten Verbindungsweges zwischen Leckagehohlraum und Umgebung **(DE 28 18 787 C2)** oder durch den Verschluß des entsprechenden gehäuseseitig ausgeführten Verbindungsweges **(WO 98/54 493)** gegeben ist.

Beide Doppelsitzventile sind jedoch mit einem Nachteil behaftet, der darin besteht darin, daß die jeweilige Membran, die die relativ zueinander verschieblichen Verschlußteile überbrückt, mit ihrem jeweiligen Endabschnitt in dem zugeordneten Verschlußteil eingespannt ist. An diesen Einspannstellen wird jeweils zwischen Membran und Verschlußteil eine Abdichtungsstelle gebildet, die zwar statischer Natur ist, in jedem der Fälle jedoch einen Spalt bildet, in den Produkt eindringen kann. Diesem Eindringen wird insbesondere dadurch Vorschub geleistet, daß die Membran an ihrer Einspannstelle aufgrund der Schließ- und Öffnungsbewegung des Ventils einer Walkbeanspruchung ausgesetzt ist, die den Spalt dynamisch aufweitet oder verengt. Die Spalte zwischen der Membran und den Verschlußteilen stellen somit zumindest im Rahmen aseptischer Anwendungen der zum Einsatz kommenden Doppelsitzventile kritische Bereiche im Produktraum dar.

In der **FR 2 223 602 A** ist ein Ventil mit einer Schließglied-Einheit beschrieben, die zwei relativ zueinander bewegliche, hintereinander angeordnete Schließglieder aufweist, die mittels einer Stange, die an dem einen Schließglied befestigt und durch das andere Schließglied hindurch- und aus dem Ventilgehäuse herausgeführt ist, betätigt werden. Sowohl der Bereich zwischen den beiden Schließgliedem als auch jener im Bereich der Stangendurchführung durch das Ventilgehäuse zwischen letzterem und dem gehäusenahen Schließglied werden jeweils von einer Membran überbrückt. Dabei bilden die beiden Membranen eine einstückige Einheit, die einheitlich aus einem Material ausgeführt ist, das elastische und abdichtende Eigenschaften besitzt. Jedes der beiden Schließglieder verschließt einen zugeordneten Durchgang zwischen einer ersten Kammer, an die ein erster Anschluß herangeführt ist, und einer zweiten Kammer, die mit einem zweiten Anschluß verbunden ist. Die beiden Schließglieder steuern somit zueinander parallele Verbindungswege zwischen den beiden Kammern.

Dieses Ventil unterscheidet sich damit signifikant von einem sog. Doppelsitzventil, bei dem die beiden hintereinander angeordneten Schließglieder in der Schließstellung des Doppelsitzventils einen Leckagehohlraum zwischen sich begrenzen, der über wenigstens einen steuerbaren Verbindungsweg mit der Umgebung des Doppelsitzventils verbunden und der innerhalb einer Verbindungsbohrung positioniert ist, die zwei Innenräume eines Ventilgehäuses miteinander verbindet und die von den beiden Schließgliedem gesteuert wird.

Das bekannte Ventil offenbart weiterhin, daß das Ende der Membrane zwischen dem stimseitigen Ende des Gehäuses und dem zugeordneten Deckel eingespannt ist, wobei an der Einspannstelle eine wulstförmige Verdickung vorgesehen ist. Bei Membranmaterialien, die unter Druck- und Temperatureinfluß zum Kriechen neigen, besteht bei einer derartigen Membraneinspannung die Gefahr, daß innenseits im Ventilgehäuse zwischen Membran und Gehäuse ein kritischer Spalt entsteht, der bei einem Ventile, das aseptischen Anforderungen gerecht werden muß, nicht zu tolerieren ist.

Aus dem Bereich aseptischer Hubventile mit einem einfach dichtenden Verschlußteil ist eine sog. Schließglied-Einheit bekannt **(EP 0 508 658 B1**), bei der ein Verschlußteil mit einem gehäuseseitigen Anschlußflansch, durch den die das Schließglied antreibende Ventilstange hindurchgeführt ist, über eine Membran verbunden ist. Das Verschlußteil, die Membran und der Anschlußflansch bilden eine einstückige Einheit, wobei das Material, aus dem diese Einheit hergestellt ist, selbstdichtende Eigenschaften besitzt.

Ausgehend von einem Stand der Technik, wie er in der **DE 42 43 111 A1** beschrieben ist, liegt der vorliegenden Erfindung die Aufgabe zugrunde, eine Schließglied-Einheit für ein aseptisches Doppelsitzventil zu schaffen, die einfach in ihrem Aufbau ist, ohne Dichtungen auskommt, eine strömungsgünstige Ausgestaltung des Leckagehohlraumes besitzt und die keine kritischen Bereiche im Leckagehohlraum, im produktbeaufschlagten Ventilgehäuse und an den Stangendurchführungen im Ventilgehäuse aufweist.

Diese Aufgabe wird durch die Merkmale des Anspruchs 1 gelöst. Vorteilhafte Ausgestaltungen der vorgeschlagenen Schließglied-Einheit für ein aseptisches Doppelsitzventil sind Gegenstand der Unteransprüche.

Da die vorgeschlagene Schließglied-Einheit einerseits als einteilige (im Sinne einer einstückigen) Einheit und andererseits einheitlich aus einem Material ausgeführt ist, das elastische und abdichtende Eigenschaften besitzt, können die Dichtungen im Sitzbereich und im Bereich der Abdichtung des Anschlußflansches mit dem Ventilgehäuse, die grundsätzlich immer unter sanitären Gesichtspunkten problematisch sind, entfallen. Weiterhin entfallen zum einen die nach dem Stand der Technik für derartige Schließglied-Einheiten erforderlichen Verbindungsstellen zwischen den Verschlußteilen und den an diese angeschlossenen Membrane und zum anderen die Verbindungsstellen an der die Ventilstange überbrückenden Membran im Bereich des Schließgliedes einerseits und des Anschlußflansches andererseits. Die bei einem Doppelsitzventil notwendige relative Beweglichkeit der beiden Schließglieder bzw. der mit diesen verbundenen Verschlußteile zueinander ist durch die die beiden Verschlußteile überbrückende erste Membran in jedem Falle sichergestellt. Dabei kann diese erste Membran aus einer einzigen Balgfalte oder auch aus mehreren solcher Balgfalten bestehen. Bei der Ausgestaltung der ersten Membran mit einer einzigen Balgfalte wird der Leckagehohlraum durch diese denkbar einfache membranseitige Begrenzung geometrisch äußerst einfach und damit besonders strömungsgünstig ausgebildet. Ein Festsetzen von Partikeln aus dem den Leckagehohlraum beaufschlagenden Fluid ist dadurch nahezu unmöglich.

Als Material kommt vorzugsweise Polytetrafluorethylen (PTFE, beispielsweise Teflon) in Frage, da es als positive Eigenschaften hohe Elastizität, chemische Widerstandsfähigkeit und eine lange Lebensdauer, allerdings unter Inkaufnahme einer relativ großen plastischen Duktilität (starke Neigung zum "Fließen" bzw. "Kriechen"), aufweist. Zur Einleitung der Stell- und Führungskräfte ist in den beiden Verschlußteilen jeweils ein Befestigungseinsatz form- und/oder kraftschlüssig eingebettet.

Damit die Probleme sicher beherrscht werden können, die im Zusammenhang mit der Kriechneigung jener Werkstoffe, die üblicherweise für derartige Anwendungen in Frage kommen, auftreten, ist weiterhin erfindungsgemäß vorgesehen, daß die erste Membran an ihrem freien Ende in Form eines Anschlußflansches mit einer konischen Dichtfläche ausgebildet ist, die gegen eine komplementäre Ringsitzfläche des Gehäuses anliegt. Dieser Anschlußflansch erlaubt es, die an sich kritische Einbettung der Membran im Gehäusebereich in vorteilhafter Weise zu beeinflussen. Dabei ist der Anschlußflansch im Bereich seiner konischen Dichtfläche auf eine den festigkeitsbedingten Erfordernissen entsprechende Mindestwandstärke in Form eines membranförmigen Dichtelements reduziert. Durch diese Maßnahme wird eine Materialanhäufung des kriechfähigen Balgwerkstoffes im kritischen Abdichtungsbereich vermieden.

Die Herstellung der Schließglied-Einheit gestaltet sich insofern relativ einfach und damit kostengünstig, da deren Rohling ganzheitlich zusammen mit den eingebetteten Befestigungseinsätzen in einer Form ausgeformt werden kann. Anschließend wird durch spanende Bearbeitung aus dem Rohling die endgültige Form hergestellt. Dabei sind die beiden Verschlußteile in einem minimalen Abstand zueinander positioniert, der durch die geblockte Lage der Befestigungseinsätze zueinander determiniert ist, und in dieser Lage erfolgt die spangebende Formgebung der Schließglied-Einheit bis zu ihrer endgültigen Ausführung.

Eine vorteilhafte Ausgestaltung des Anschlußflansches sieht vor, daß die aus der ventilhubbedingten Verformung des Faltenbalges zwischen Schließglied und Anschlußflansch und/oder dem jeweiligen Druck im Gehäuse resultierenden Kräfte dort im Ventilgehäuse aufgenommen werden, wo sie originär entstehen. Eine biegemomentfreie Aufnahme dieser Kräfte wird bei der vorgeschlagenen Lösung dadurch erreicht, daß der Anschlußflansch der Schließglied-Einheit im Bereich seiner Verbindung mit der Membran (Balg) ein sich gehäuseseitig mittelbar abstützendes Befestigungsteil aufweist, das die auftretenden Kräfte auf kürzestem Wege vom Balg bzw. dem Anschlußflansch in das Gehäuse überträgt. Ein Durchleiten dieser Kräfte als Querkräfte durch den sich in radialer Richtung nach außen erstreckenden Anschlußflansch zur Einspannstelle, in deren Bereich die konische Dichtfläche und ein kritischer Dichtungsspalt vorliegen, wie dies beispielsweise bei dem bekannten Ventil gemäß **EP 0 508 658 B1** der Fall ist, wird dadurch vermieden. Ein den Dichtungsspalt zwischen Anschlußflansch und Ventilgehäuse beanspruchendes Biegemoment tritt bei der vorgeschlagenen Lösung praktisch nicht auf. Das vorgeschlagene Befestigungsteil nimmt Axialkräfte auf, die beispielsweise durch Streckung des Balges in die Schließstellung des Hubventils oder durch im Innenraum des Gehäuses wirksame Unterdrücke gegenüber der Umgebung des Hubventils hervorgerufen werden.

Damit im Bereich des membranförmigen Dichtelementes am Anschlußflansch die notwendige Vorspannung und damit der erforderliche Dichtungskontakt mit der komplementären Ringsitzfläche im Ventilgehäuse erhalten bleibt, ist weiterhin gemäß einer vorteilhaften Ausführungsform vorgesehen, daß das membranförmige Dichtelement auf seiner der konischen Dichtfläche abgewendeten Seite wenigsten einen vorgespannten elastischen Druckring aufweist, der die Dichtfläche auf die komplementäre Ringsitzfläche preßt. Der elastische Druckring wirkt praktisch wie eine Feder, die die konische Dichtfläche, auch im Falle eines Kriechens des Dichtungswerkstoffes an dieser Stelle, nachhaltig unter Vorspannung hält und somit die Aufweitung des Dichtungsspaltes mit den vorstehend beschriebenen Nachteilen zuverlässig verhindert.

Die dem jeweiligen Verschlußteil zugeordnete Stange ist mit letzterem formund/oder kraftschlüssig verbunden. Zeckmäßigerweise ist in jedem Verschlußteil ein Befestigungseinsatz eingebettet, der sich über eine Befestigungsplatte bis weit in den peripheren Bereich des Verschlußteiles erstreckt und, in radialer Richtung gesehen, im innenseitigen Bereich eine Befestigungsmuffe aufweist, die die Verbindung zur jeweils zugeordneten Stange herstellt. Die beiden insgesamt vorab fertiggestellten Befestigungseinsätze werden vor dem Sintern und der Ausformung des Rohlings der Schließglied-Einheit in dessen Herstellungsform eingebracht.

Dabei hat es sich als zweckmäßig herausgestellt, die Endlage der beiden Verschlußteile zueinander in ihrer Offenstellung dadurch zu determinieren, daß der Befestigungseinsatz des aktiven Verschlußteiles an jenem des passiven Verschlußteiles zur Anlage kommt. Die vorgenannte Endlage kann aber auch an anderer Stelle festgelegt werden, beispielsweise im Stellantrieb des Doppelsitzventils.

Durch die begrenzte Beweglichkeit der Verschlußteile zueinander und die Möglichkeit, jedes Verschlußteil über die ihm zugeordnete Stange, unabhängig vom ändern, anzusteuern, ist es auch ohne weiteres möglich, jedes der beiden Verschlußteile in eine Teiloffenstellung zu überführen. Dies ist beispielsweise dann erforderlich, wenn die Verschlußteile und ihre zugeordneten Sitzflächen einer Sitzreinigung unterzogen werden sollen. Eine Sitzreinigung wird derart vollzogen, daß das zur Sitzreinigung anstehende Verschlußteil um einen Teilhub von seiner Sitzfläche entfernt wird, während das andere Verschlußteil auf seiner Sitzfläche verbleibt. Die dem Leckagehohlraum zwischen den beiden Verschlußteilen auf diesem Wege zugeführte Reinigungsflüssigkeit wird über wenigstens einen verschließbaren Verbindungsweg zwischen dem Leckagehohlraum und der Umgebung des Doppelsitzventils abgeführt.

Auch in der Schließstellung des Doppelsitzventils ist eine Reinigung des Leckagehohlraums möglich, wenn der Leckagehohlraum über wenigstens zwei steuerbare Verbindungswege mit der Umgebung des Doppelsitzventils verbunden ist.

Falls die Schließglied-Einheit auch auf der dem Stellantrieb gegenüberliegenden Seite mit einer weiteren Stange versehen ist, die gleichfalls aus dem zugeordneten Ventilgehäuse herausgeführt ist, ergibt sich die Möglichkeit, die bislang fliegend gelagerte Schließglied-Einheit nunmehr beidseitig im Ventilgehäuse zu lagern und zu führen.

Die vorgenannte zusätzliche Stange kann auch dazu verwendet werden, einen sog. Druckausgleich an der Schließglied-Einheit vorzunehmen. Bekanntlich ergeben sich aus dem Produktdruck auf die Verschlußteile, sei es Über- oder Unterdruck, Kräfte, die unter bestimmten Bedingungen die Verschlußteile von ihrer zugeordneten Sitzfläche abheben wollen. Durch Druckausgleichsmaßnahmen, beispielsweise durch einen sog. Ausgleichskolben, lassen sich gleichgroße Gegenkräfte aktivieren, die für ein ausgewogenes Kräftegleichgewicht an den jeweiligen Verschlußteilen sorgen. So läßt sich im vorliegenden Falle ein Aufdrücken des Doppelsitzventils aufgrund eines Überdruckes im dem kleineren Verschlußteil benachbarten Ventilgehäuse dadurch verhindern, daß die durch dieses Ventilgehäuse hindurchgeführte Stange mit einem der Angriffsfläche des Verschlußteils entsprechenden Ausgleichskolben verbunden wird. Dabei ist dieser Ausgleichskolben derart unter dem biegeweichen Anschlußflansch anzuordnen, daß die an letzterem angreifenden Drücke im Ventilgehäuse und daraus resultierenden Kräfte auf dem Ausgleichskolben abgestützt werden.

Die Schließglied-Einheit vereinfacht sich, wenn die beiden Verschlußteile durch in der Schließglied-Einheit angeordnete elastisch federnde Elemente, beispielsweise Schrauben- oder Tellerfedern, gegeneinander vorgespannt werden. Dadurch kann die Ventilstange des unabhängig betätigten Verschlußteiles entfallen.

Eine weitere Ausgestaltung der Schließglied-Einheit sieht vor, die Stellantriebe für die einzelnen Verschlußteilbewegungen sowohl für das Öffnen des Doppelsitzventils als auch ggf. für die Teilhubbewegungen im Rahmen der Sitzreinigung innerhalb der Schließglied-Einheit auszubilden. Bei diesen Stellantrieben kann es sich beispielsweise um druckmittelbeaufschlagte Antriebe oder um elektromagnetisch betätigte Antriebe handeln.

Die Ausführung der vorgeschlagenen Schließglied-Einheit bleibt nicht auf die vorstehend als Sitzteller ausgebildeten Verschlußteile beschränkt. Die beiden Verschlußteile können auch jeweils als vorzugsweise durchmessergleiche Schieberkolben ausgeführt werden, die in einer im Ventilgehäuse vorgesehenen zylinderförmigen Sitzbohrung dichtend Aufnahme finden. Durch geeignete Auswulstung im jeweiligen Sitzbereich der Sitzbohrung wird dabei die Abdichtung gegenüber dem zugeordneten Schieberkolben, der ebenfalls ohne separate, diskrete Dichtung auskommt, da er aus selbstdichtendem Werkstoff ausgeführt ist, verbessert.

Die Verschlußteil-Konfiguration kann auch aus einem Sitzteller und einem Schieberkolben bestehen. Diese Ausgestaltung und auch jene mit zwei Schieberkolben schaffen die Voraussetzungen für leckagefreies oder wenigstens leckagearmes Schalten.

Ausführungsbeispiele der Erfindung sind in der Zeichnung dargestellt und werden nachfolgen beschrieben. Es zeigen
- **Figur 1**: einen Mittelschnitt durch eine erste Ausführungsform der vorgeschlagenen Schließglied-Einheit, wobei sich das unabhängig angetriebene Verschlußteil um einen Teilhub von seiner zugeordneten Sitzfläche entfernt hat und am anderen Verschlußteil, das sich noch in seiner Schließlage befindet, zur Anlage gekommen ist;
- **Figur 2**: ebenfalls im Mittelschnitt einen Teil der Schließglied-Einheit gemäß Figur 1 im Bereich der beiden Verschlußteile, wobei letztere in einer Lage, die sie in ihrem Ausbauzustand zueinander einnehmen, dargestellt sind;
- **Figur 3**: gleichfalls im Mittelschnitt die vorgeschlagene Schließglied-Einheit in einer zweiten Ausführungsform, bei der beiderseits der beiden Verschlußteile Ventilstangen vorgesehen sind, die durch das jeweils zugeordnete Ventilgehäuse hindurch- und aus diesem herausgeführt sind und
- **Figur 4**: einen Mittelschnitt durch die vorgeschlagene Schließglied-Einheit in einer dritten Ausführungsform mit zwei als Schieberkolben ausgebildeten Verschlußteilen.

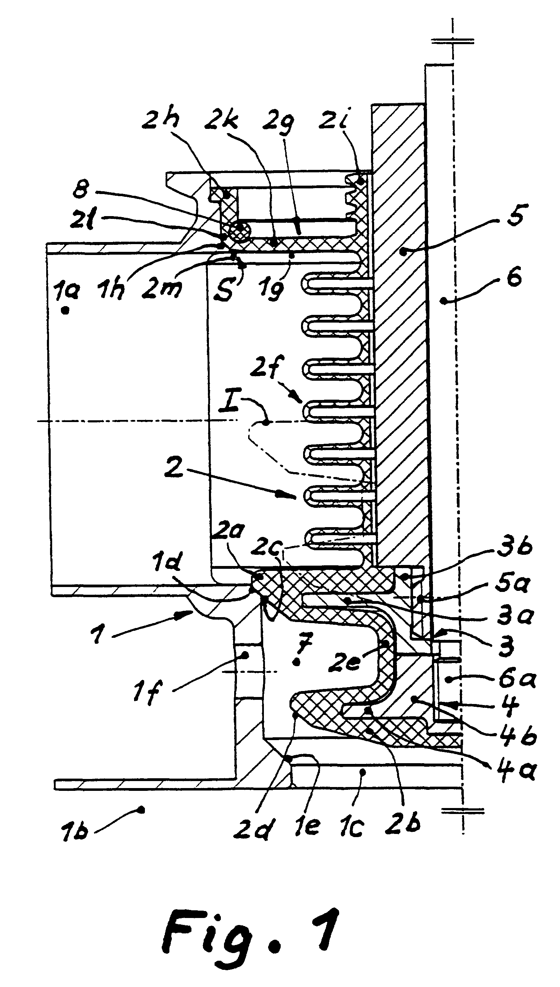

Ein Ventilgehäuse 1 (**Figur 1**) besteht aus einem lediglich angedeuteten ersten und einem ebenfalls nur angedeuteten zweiten Ventilgehäuseteil 1a bzw. 1b. Beide Ventilgehäuseteile 1a, 1b sind über eine Verbindungsöffnung 1c miteinander verbunden. Im Bereich der Verbindungsöffnung 1c ist, angrenzend an das erste Ventilgehäuseteil 1a, an diesem eine erste Sitzfläche 1d und, angrenzend an das zweite Ventilgehäuseteil 1b, eine zweite Sitzfläche 1e ausgebildet. Die Sitzflächen 1d und 1e haben konusförmige Gestalt, und sie dienen jeweils der Aufnahme einer komplementär ausgebildeten Ringsitzflächen 2c bzw. 2d an einem ersten Verschlußteil 2a bzw. zweiten Verschlußteil 2b einer einteiligen Schließglied-Einheit 2.

Die beiden Verschlußteile 2a und 2b sind aus einem Material ausgeführt, das elastische und abdichtende Eigenschaften besitzt. Hier kommt vorzugsweise Polytetrafluorethylen (PTFE) in Frage. Im ersten Verschlußteil 2a ist ein erster Befestigungseinsatz 3 eingebettet, der sich, in radialer Richtung gesehen, mit einer ersten Befestigungsplatte 3a bis in den Außenbereich des Verschlußteils 2a erstreckt und der innenseits in einer ersten Befestigungsmuffe 3b endet. Im zweiten Verschlußteil 2b ist ein zweites Befestigungsteil 4 vorgesehen, in gleicher Weise bestehend aus einer zweiten Befestigungsplatte 4a und einer zweiten Befestigungsmuffe 4b.

Die beiden Verschlußteile 2a und 2b sind über ein membranförmiges Mittelteil 2e, das aus dem gleichen Material wie die Verschlußteile 2a, 2b besteht, stoffschlüssig miteinander verbunden. In das erste Befestigungsteil 3 des ersten Verschlußteils 2a ist eine als Hohlstange ausgeführte erste Stange 5 über einen Gewindezapfen 5a eingeschraubt und mit dem zweiten Befestigungsteil 4 des zweiten Verschlußteiles 2b ist eine in der Hohlstange 5 innenseits geführte zweite Stange 6 über einen Gewindezapfen 6a verbunden. Die Hohlstange 5 und die in ihr geführte zweite Stange 6 sind über das erste Ventilgehäuseteil 1a in die Umgebung des Doppelsitzventils geführt.

Diese Durchführung der Hohlstange 5 im Ventilgehäuse 1a wird von einem Balg 2f überbrückt, der einerseits mit dem ersten Verschlußteil 2a und andererseits mit einem Anschlußflansch 2g verbunden ist. Letzterer besteht unter anderem aus einer Verschlußplatte 2k, die eine im wesentlichen scheibenförmige, in einer Ebene senkrecht zur Längsachse der Schließglied-Einheit 2 orientierte, radial innenseits vom Balg 2f ausgehende Ausprägung besitzt, und sie erstreckt sich so weit radial nach außen, daß sie in Verbindung mit einer korrespondierenden oberen Gehäuseöffnung 1g im ersten Ventilgehäuse 1a den Ausbau der Schließglied-Einheit 2 nach oben erlaubt.

Die scheibenförmige Verschlußplatte 2k ist radial außenseits auf eine den festigkeitsbedingten Erfordernissen entsprechende Mindestwandstärke in Form eines membranförmigen Dichtelementes 2I reduziert. Letzteres ist in Form eines in Richtung einer komplementären Ringsitzfläche 1h im ersten Ventilgehäuse 1a orientierten Fortsatzes an der Verschlußplatte 2k ausgebildet, und es weist eine mit der Ringsitzfläche 1h zusammenwirkende konische Dichtfläche 2m auf. Letztere wird über einen vorgespannten elastischen Druckring 8, der auf der der konischen Dichtfläche 2m des membranförmigen Dichtelements 2I abgewendeten Seite angeordnet ist, auf die komplementäre Ringsitzfläche 1h gepreßt. Die Verschlußplatte 2k endet außenseits in einem Kragen 2h, der in dem ersten Ventilgehäuseteil 1a formschlüssig Aufnahme findet.

Zur Vermeidung eines Biegemomentes, resultierend aus einem Kräftepaar, das beispielsweise durch eine Zugkraft im Balg 2f und durch die entsprechende Reaktionskraft im Bereich der Verschlußplatte 2k gebildet wird, ist der gesamte Anschlußflansch 2g der Schließglied-Einheit 2 im Bereich seiner Verbindung mit dem Balg 2f mit einem in einem nicht dargestellten Gehäuseoberteil verankerten Befestigungsteil 2i versehen. In der dargestellten Ausführungsform ist das Befestigungsteil 2i außenseits mit einem Gewinde, vorzugsweise mit einem Trapezgewinde, ausgestattet, über das eine kraft- und formschlüssige Verbindung mit dem Gehäuseoberteil möglich ist. Dadurch können die vom Balg 2f auf die Verschlußplatte 2k ausgeübten Zugkräfte unmittelbar in das Gehäuseoberteil eingeleitet und dort aufgenommen werden, ohne die Bildung eines einen kritischen Dichtungsspalt S zwischen komplementärer Ringsitzfläche 1h und dem membranförmigen Dichtelement 2I beeinflussenden Biegemomentes. Das Befestigungsteil 2i läßt sich selbstverständlich auch über andere kraft- und/oder formschlüssige Verbindungen unmittelbar oder mittelbar im Gehäuseoberteil verankern.

Zur Abführung von Leckagen oder zur Reinigung eines zwischen den Verschlußteilen 2a, 2b gebildeten Leckagehohlraums 7, jeweils in der Schließstellung des Doppelsitzventils, dient ein im Ventilgehäuse 1 zwischen den Sitzflächen 1d und 1e ausgebildeter Verbindungsweg 1f. Dieser wird zweckmäßigerweise über einen nicht dargestellten, ansteuerbaren Verschluß, der vorzugsweise bündig mit der inneren Begrenzung des Leckagehohlraums 7 abschließt, verschlossen. Falls der Leckagehohlraum 7 in der Schließstellung des Doppelsitzventils im Durchfluß gereinigt werden soll, ist neben dem Verbindungsweg 1f wenigstens ein weiterer Verbindungsweg zwischen Leckagehohlraum 7 und Umgebung des Doppelsitzventils auszuführen.

Die strichpunktförmig dargestellte Kontur I der beiden Verschlußteile 2a und 2b zeigt letztere in der Offenstellung des Doppelsitzventils.

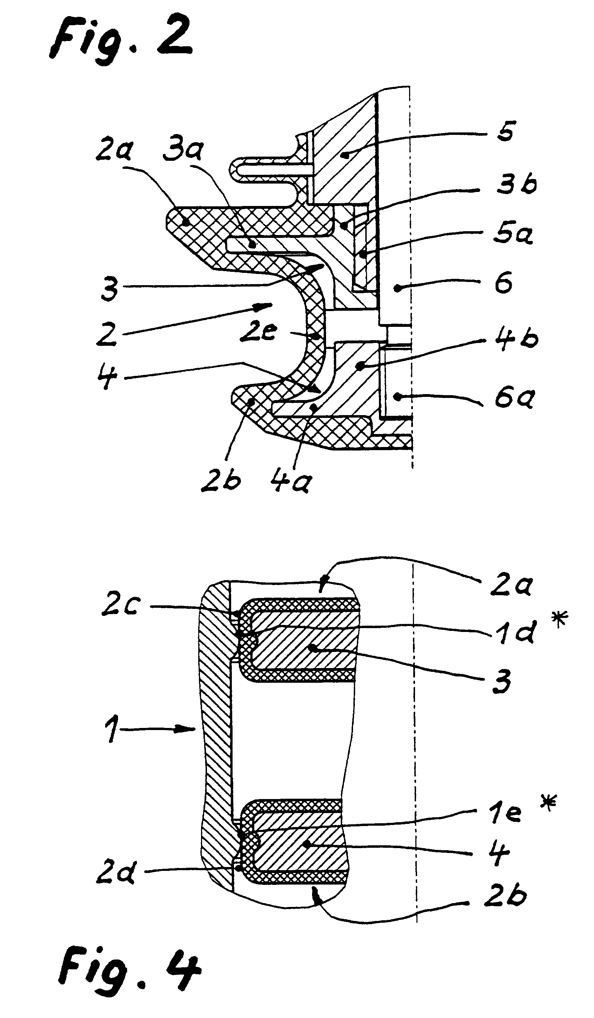

**Figur 2** zeigt die beiden Verschlußteile 2a und 2b in ihrer weitestgehenden Entfernung voneinander, die im Ausbauzustand der Verschlußteile 2a, 2b möglich ist. Es ist deutlich erkennbar, daß das membranförmige Mittelteil 2e die für die Schaltfunktion des Doppelsitzventils notwendige begrenzte Relativbewegung der beiden Verschlußteile 2a und 2b zueinander durch seine duktile Formgestaltung erlaubt.

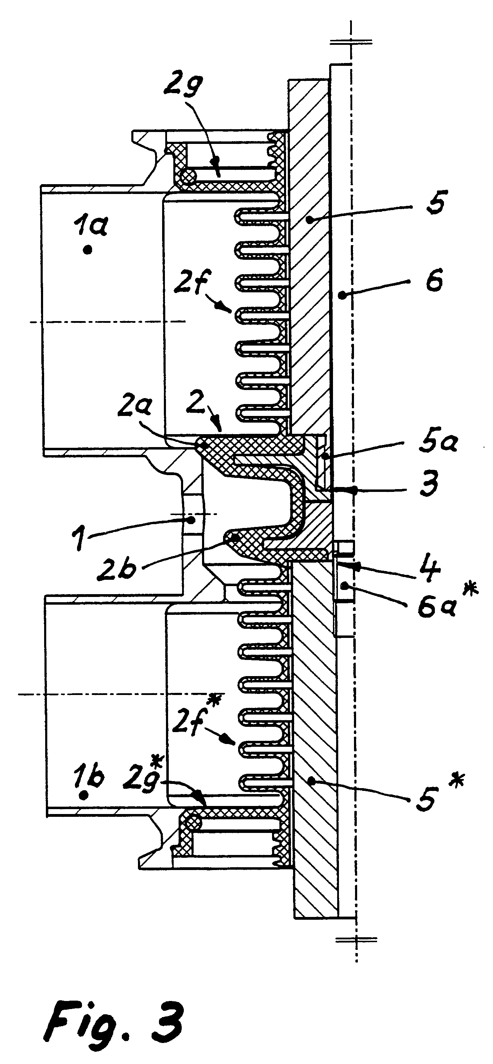

Die zweite Ausführungsform der vorgeschlagenen Schließglied-Einheit 2 (**Figur 3**) entsteht aus jener gemäß Figur 1 dadurch, daß beispielsweise die zweite Stange 6 durch den zweiten Befestigungseinsatz 4 mittels eines verlängerten Gewindezapfens 6a* ein Stück hindurchgeschraubt ist und letzterer dadurch mit einer dritten Stange 5* verbunden ist, die über das zweite Ventilgehäuseteil 1b in die Umgebung des Doppelsitzventils geführt ist. Diese Stangendurchführung durch das zweite Ventilgehäuseteil 1b wird in gleicher Weise, wie dies bei der Stangendurchführung im ersten Ventilgehäuseteil 1a der Fall ist, über eine als Balg ausgebildete dritte Membran 2f* überbrückt. Diese ist einerseits mit dem zweiten Verschlußteil 2b und andererseits mit einem Anschlußflansch 2g* verbunden. Bei dieser Lösung ist die Schließglied-Einheit 2 beiderseits im zugeordneten Ventilgehäuseteil 1a bzw. 1b gelagert und geführt. Durch Anordnung eines nicht dargestellten Ausgleichkolbens, der mit der Stange 5* verbunden ist und der den Anschlußflansch 2g* stützt, läßt sich ein Druckausgleich mit den an der Schließglied-Einheit 2 infolge von Produktdrücken angreifenden Kräften durchführen.

In **Figur 4** ist die vorgeschlagene Schließglied-Einheit 2 in einer aus zwei Schieberkolben 2a, 2b bestehenden Verschlußteil-Konfiguration dargestellt. Zur Verbesserung der Abdichtung im jeweiligen Sitzbereich sind gehäuseseitig Auswulstungen 1d* bzw. 1e* vorgesehen. Ansonsten sind die Verschlußteile 2a, 2b durch ein nicht dargestelltes membranförmiges Mittelteil überbrückt, das die begrenzte relative Beweglichkeit der Verschlußteile 2a, 2b zueinander sicherstellt. Die Befestigungseinsätze 3, 4 sind im dargestellten Ausführungsbeispiel derart im selbstdichtenden Material des zugeordneten Verschlußteils 2a bzw. 2b eingebettet, daß sich im jeweiligen Sitzbereich eine Verstärkung des selbstdichtenden Materials in Form einer formschlüssigen Verzahnung mit dem jeweiligen Befestigungsteil 3, 4 ergibt.

Die endseitige Ausbildung des Anschlußflansches 2g mit einem Kragen 2h in der in den **Figuren 1** und **3** dargestellten Form ist eine bevorzugte Ausführungsform, die auch bei extremsten Beanspruchungen ein Herausreißen des membranförmigen Dichtelementes 2I aus seiner Einspannstellung zwischen der Ringsitzfläche 1h und dem Druckring 8 verhindert.

Eine andere, nicht dargestellte Ausführungsform sieht in diesem Zusammenhang vor, den elastischen Druckring 8 in einer nutförmigen Ausnehmung in einem Stützkörper aufzunehmen, wobei dieser Stützkörper den Druckring 8 bis auf jenen Teil umschließt, welcher mit dem membranförmigen Dichtelement 2I in Kontakt steht. Das Dichtelement 2I endet in dieser Anordnung am äußeren Durchmesser der Ringsitzfläche 1h. Der Stützkörper findet in der oberen Gehauseöffnung 1g des Gehäuses 1a koaxial zu den Stangen 5, 6 unmittelbar Aufnahme, und er stützt sich axial in Richtung des Innenraumes des Gehäuses 1a über eine Stützfläche auf einer an die obere Gehäuseöffnung 1g angrenzenden Anschlagfläche ab. Im gespannten Zustand des Systems erfährt der elastische Druckring 8 somit eine definierte Vorspannung mit metallischem Anschlag des Spannelementes, dem Stützkörper.

## Patentansprüche

1. Schließglied-Einheit für ein aseptisches Doppelsitzventil,
• die aus zwei relativ zueinander beweglichen Schließgliedern (2a, 2b) besteht, von denen das unabhängig angetriebene (2b) beim Öffnungsvorgang nach einem bestimmten Teilhub am abhängig angetriebenen (2a) zur Anlage kommt und letzteres bei der weiteren Öffnungsbewegung gleichfalls in die Offenstellung überführt, von denen jedes im jeweiligen Sitzbereich ein Verschlußteil (2a, 2b) aufweist und diese Verschlußteile in der Schließstellung des Doppelsitzventils einen Leckagehohlraum (7) zwischen sich begrenzen, der über wenigstens einen steuerbaren Verbindungsweg (1f) mit der Umgebung des Doppelsitzventils verbunden ist,
• bei der eine mit dem einen Verschlußteil verbundene und zu einem Stellantrieb durch das Ventilgehäuse hindurchgeführte erste Stange (5) von einer ersten Membran (2f) umschlossen ist und diese Membran jeweils endseitig einerseits unmittelbar oder mittelbar mit dem Verschlußteil und andererseits mit dem Ventilgehäuse dichtend verbunden ist,
• bei der der Bereich zwischen den beiden Verschlußteilen von einer zweiten Membran (2e), mit der die Verschlußteile jeweils verbunden sind, überbrückt wird und
• bei der die beiden Verschlußteile und die beiden Membrane eine auswechselbare Einheit (2) bilden,
**dadurch gekennzeichnet,**
• **daß** die Einheit (2) einteilig und einheitlich aus einem Material ausgeführt ist, das elastische und abdichtende Eigenschaften besitzt,
• **daß** im ersten Verschlußteil (2a) ein erster Befestigungseinsatz (3) und im zweiten Verschlußteil (2b) ein zweiter Befestigungseinsatz (4), jeweils zur Einleitung der Stell- und Führungskräfte, form- und/oder kraftschlüssig eingebettet ist,
• **daß** die erste Membran (2f) an ihrem freien Ende in Form eines Anschlußflansches (2g) mit einer konischen Dichtfläche (2m) ausgebildet ist, die gegen eine komplementäre Ringsitzfläche (1h) des Gehäuses (1a) anliegt und
• **daß** der Anschlußflansch (2g) im Bereich seiner konischen Dichtfläche (2m) auf eine den festigkeitsbedingten Erfordernissen entsprechende Mindestwandstärke in Form eines membranförmigen Dichtelementes (2l) reduziert ist.

2. Schließglied-Einheit nach Anspruch 1, **dadurch gekennzeichnet, daß** diese aus Polytetrafluorethylen hergestellt ist.

3. Schließglied-Einheit nach Anspruch 1 oder 2, **dadurch gekennzeichnet, daß** der Anschlußflansch (2g) im Bereich der ersten Stange (5) ein sich gehäuseseitig mittelbar abstützendes Befestigungsteil (2i) zur weitestgehenden biegemomentfreien Aufnahme der aus der ventilhubbedingten Verformung der ersten Membran (2f) und/oder dem jeweiligen Druck im Gehäuse (1a) resultierenden Kräfte aufweist.

4. Schließglied-Einheit nach einem der Ansprüche 1 bis 3, **dadurch gekennzeichnet, daß** das membranförmige Dichtelement (2l) auf seiner der konischen Dichtfläche (2m) abgewendeten Seite wenigstens einen vorgespannten elastischen Druckring (8) aufweist, der die Dichtfläche (2m) auf die komplementäre Ringsitzfläche (1h) preßt.

5. Schließglied-Einheit nach einem der Ansprüche 1 bis 4, **dadurch gekennzeichnet, daß** in der Offenstellung des Doppelsitzventils der zweite Befestigungseinsatz (4) am ersten Befestigungseinsatz (3) anliegt.

6. Schließglied-Einheit nach einem der Ansprüche 1 bis 5, **dadurch gekennzeichnet, daß** die Schließglied-Einheit (2) auf der dem Stellantrieb gegenüberliegenden Seite mit einer dritten Stange (5*) versehen ist, die aus dem zugeordneten zweiten Ventilgehäuse (1b) herausgeführt und die zwischen dem zweiten Verschlußteil (2b) und dem zweiten Ventilgehäuse (1b) mit einer dritten Membran (2f*) überbrückt ist.

7. Schließglied-Einheit nach Anspruch 6, **dadurch gekennzeichnet, daß** die dritte Stange (5*) im Bereich ihrer Durchführung durch das zweite Ventilgehäuse (1b) als Ausgleichskolben ausgebildet ist, der zum weitgehenden Ausgleichen von Druckkräften, die auf das zweite Verschlußteil (2b) vom im zweiten Ventilgehäuse (1b) anstehenden Fluid ausgeübt werden, geformt ist.

8. Schließglied-Einheit nach einem der Ansprüche 1 bis 7, **dadurch gekennzeichnet, daß** die Verschlußteile (2a, 2b) durch in der Schließglied-Einheit (2) angeordnete federnde Elemente, vorzugsweise Schrauben- oder Tellerfedern, gegeneinander vorgespannt sind.

9. Schließglied-Einheit nach einem der Ansprüche 1 bis 8, **dadurch gekennzeichnet, daß** innerhalb der Schließglied-Einheit (2) Stellantriebe für die Bewegungen der Verschlußteile (2a, 2b) vorgesehen sind.

## Claims

1. Closure member unit for an aseptic double seat valve,
• consisting of two closure members (2a, 2b) moveable with regard to each other, the one (2b) independently driven of which coming to bear at the dependently driven one (2a) after a partial lift in the opening process and transferring the latter one to the open position in the further opening movement as well, each of which comprising a closing part (2a, 2b) in the respective seat area and these closing parts defining between them a leakage cavity (7) in the closed position of the double seat valve, which in connected to the surroundings of the double seat valve through at least one controllable connection path (1f),
• wherein a first rod (5) connected with one of the closing parts and passed through the valve housing to an actuator is surrounded by a first membrane (2f) and this membrane is connected in sealing manner indirectly or directly with the closing part on the one side and with the valve housing on the other side,
• wherein the area between the two closing parts is bridged by a second membrane (2e) connected to the each of the closing parts, and
• wherein the two closing parts and the two membranes form a replaceable unit (2),
**characterised in that**
• the unit (2) is designed integrally and uniformly of a material having elastic and sealing properties,
• that in the first closing part (2a) a first mounting insert (3) and in the second closing part (2b) a second mounting insert (4) are embedded each in form-fitting and/or frictional manner for the introduction of the displacing and guiding forces,
• that the first membrane (2f) is formed at its free end in form of a coupling flange (2g) with a conical sealing surface (2m), which bears against a complementary annular seat surface (1h) of the housing (1a), and
• that the coupling flange (2g) in the area of its conical sealing surface (2m) is reduced to a wall thickness at least corresponding to the requirements dictated by stability in form of a membrane-like sealing element (2l).

2. Closure member unit according to claim 1, **characterised in that** said unit is made of poly(tetrafluoroethylene).

3. Closure member unit according to claim 1 or 2, **characterised in that** the coupling flange (2g) in the area of the first rod (5) comprises an attachment part (2i) supported indirectly on the side of the housing for the largest possible reception free of bending moment of the forces resulting from the deformation of the first membrane (2f) cause by the valve lift and/or from the respective pressure in the housing (1a).

4. Closure member unit according to one of the claims 1 to 3, **characterised in that** the membrane-shaped sealing element (2l) on its side facing away from the conical sealing surface (2m) comprises at least one biased elastic thrust ring (8) pressing the sealing surface (2m) onto the complementary annular seat surface (1h).

5. Closure member unit according to one of the claims 1 to 4, **characterised in that** in the open position of the double seat valve the second mounting insert (4) bears against the first mounting insert (3).

6. Closure member unit according to one of the claims 1 to 5, **characterised in that** the closure member unit (2) is provided with a third rod (5*) on the side opposite to the actuator, which extends out of the associated second valve housing (1b) and is bridged between the second closing part (2b) and the second valve housing (1b) with a third membrane (2f*).

7. Closure member unit according to claim 6, **characterised in that** the third rod (5*) is formed in the area of its passage through the second valve housing (1b) as compensating piston, which is formed for the largest possible compensation of pressure forces exerted on the second closing part (2b) by the fluid existing in the second valve housing (1b).

8. Closure member unit according to one of the claims 1 to 7, **characterised in that** the closing parts (2a, 2b) are biased against each other by resilient elements, preferably spiral or cup springs, arranged in the closure member unit (2).

9. Closure member unit according to claim 1 to 8, **characterised in that** actuators for the movements of the closing parts (2a, 2b) are provided within the closure member unit (2).

## Revendications

1. Unité d'élément de fermeture pour une soupape aseptique à double siège,
qui est constituée de deux éléments de fermeture (2a, 2b) mobiles l'un par rapport à l'autre dont celui entraîné indépendamment (2b) vient s'appuyer sur celui entraîné dépendamment (2a) selon un mouvement de levage partiel défini lors de l'opération d'ouverture, et ce dernier se place également en position d'ouverture lorsque le mouvement d'ouverture continue, chacun présentant une pièce de fermeture (2a, 2b) dans leur zone de siège respective et ces pièces de fermeture, en position fermée de la soupape à double siège, délimitent entre elles un espace creux de fuite (7) qui est relié au voisinage de la soupape à double siège par le biais d'au moins un passage de liaison (1f) réglable,
pour laquelle une première tige (5) reliée à une pièce de fermeture et traversant le boîtier de la soupape vers un mécanisme de réglage est entourée d'une première membrane (2f) et cette membrane est reliée de manière étanche à chacune de ses extrémités, d'un côté directement ou directement à la pièce de fermeture, et de l'autre côté au boîtier de la soupape de manière étanche,
pour laquelle la zone entre les deux pièces de fermeture est couverte par une deuxième membrane (2e) à laquelle chacune des pièces de fermeture est reliée et
pour laquelle les deux pièces de fermeture et les deux membranes forment une unité (2) qui peut être échangée,
**caractérisée en ce que**
l'unité (2) est réalisée en un tenant et uniformément dans un matériau qui possède des propriétés élastiques et étanches,
dans la première pièce de fermeture (2a) est inséré par engagement positif et/ou par entraînement par friction, un premier élément de fixation (3), et dans la seconde pièce de fermeture (2b), un second élément de fixation (4), chacun destiné à faire passer les forces de réglage et de guidage,
la première membrane (2f) est réalisée au niveau de son extrémité libre sous la forme d'une bride de raccordement (2g) avec une surface d'étanchéité conique (2m) qui s'appuie contre une surface de siège d'anneau (1b) complémentaire du boîtier (1a) et
la bride de raccordement (2g) est réduite dans sa zone de sa surface d'étanchéité conique (2m) à une épaisseur minimale de paroi correspondant aux exigences relatives à la résistance mécanique sous la forme d'un élément d'étanchéité (2f) en forme de membrane.

2. Unité d'élément de fermeture selon la revendication 1, **caractérisée en ce que** celle-ci est fabriquée en polytétrafluoréthylène.

3. Unité d'élément de fermeture selon la revendication 1 ou 2, **caractérisée en ce que** la tige de raccordement (2g) présente dans la zone de la première tige (5) une pièce de fixation (2i) s'appuyant directement sur le boîtier pour la réception la plus libre possible de mouvement de flexion des forces résultant de la déformation de la première membrane (2f) due au mouvement de soulèvement de la soupape et/ou de la pression correspondante présente dans le boîtier (1a).

4. Unité d'élément de fermeture selon l'une quelconque des revendications 1 à 3, **caractérisée en ce que** l'élément d'étanchéité (2l) en forme de membrane présente sur son côté tournant le dos à la surface d'étanchéité conique (2m) au moins un anneau de pression (8) précontraint qui appuie la surface d'étanchéité (2m) sur la surface de siège d'anneau complémentaire (1h).

5. Unité d'élément de fermeture selon l'une quelconque des revendications 1 à 4, **caractérisée en ce qu'**en position ouverte de la soupape à double siège, le second élément de fixation (4) est adjacent au premier élément de fixation.

6. Unité d'élément de fermeture selon l'une quelconque des revendications 1 à 6, **caractérisée en ce que** l'unité d'élément de fermeture (2) sur laquelle le côté faisant face à l'entraînement de réglage est muni d'une troisième tige (5*) qui est menée hors du second boîtier de soupape (1b) qui lui est attribué et qui est couverte entre la seconde pièce de fermeture (2b) et le second boîtier de soupape (1b) d'une troisième membrane (2f*).

7. Unité d'élément de fermeture selon la revendication 6, **caractérisée en ce que** la troisième tige (5*) dans la zone de son passage à travers le second boîtier de soupape (1b) est réalisée comme piston d'équilibrage qui a une forme destinée à équilibrer le plus possible les forces de pression qui sont exercées sur le second élément de fermeture (2b) par le fluide présent dans le second boîtier de soupape (1b).

8. Unité d'élément de fermeture selon l'une quelconque des revendications 1 à 7, **caractérisée en ce que** les pièces de fermeture (2a, 2b) sont précontraintes l'une contre l'autre par des éléments élastiques disposés dans l'unité de serrage (2), de préférence des ressorts cylindriques ou des ressorts à disques.

9. Unité d'élément de fermeture selon l'une quelconque des revendications 1 à 8, **caractérisée en ce qu'**à l'intérieur de l'unité d'élément de fermeture (2), des entraînements de réglages sont prévus pour les mouvements des pièces de fermeture (2a, 2b).
